# EUROPÄISCHE PATENTSCHRIFT

(11) **EP 2 036 654 B1**
(45) Veröffentlichungstag und Bekanntmachung des Hinweises auf die Patenterteilung: **12.09.2018**
(21) Anmeldenummer: 08171225.9
(22) Anmeldetag: 10.05.2007
(51) Int. Cl.: B23K 26/60

(54) **Energiestrahl-Löten oder -Schweißen von Bauteilen**
Energy beam soldering or welding of components
Soudage ou soudure par faisceau d'énergie de composants

(30) Priorität: 10.05.2006 DE 102006021755
(43) Veröffentlichungstag der Anmeldung: 18.03.2009
(62) Teilanmeldung aus: 07725079.3
(73) Patentinhaber: FFT Produktionssysteme GmbH & Co. KG, 36041 Fulda (DE)
(72) Erfinder: Schneegans, Jochen, 56237 Witgert (DE); Kraft, Martin, 36124 Eichenzell (DE)
(74) Vertreter: Schwabe - Sandmair - Marx

(56) Entgegenhaltungen:
- EP-A2- 1 029 774
- WO-A-2005/035179
- WO-A-2005/107996
- DE-A1- 2 219 798
- DE-A1-102004 028 787
- JP-A- 2000 271 742
- US-A- 5 233 149
- US-A1- 2003 218 056

## Beschreibung

Die Erfindung betrifft ein Verfahren zum Löten oder Schweißen von Bauteilen, vorzugsweise Blechen, in einer Serienfertigung, gemäß dem Oberbegriff des Anspruchs 1. Ein solches Verfahren ist aus US 5 233 149 A bekannt. Die Erfindung kann insbesondere in der Serienfertigung von Fahrzeug-Karosserieteilen zum Löten oder Schweißen von Karosserieblechen zum Einsatz gelangen. Sie eignet sich insbesondere zum Fügen von Blechen der Außenhaut von Fahrzeugen, beispielsweise eines Seitenteils mit einem Dachteil oder eines Außenblech- mit einem Innenblech eines Anbauteils, wie beispielsweise einer Tür oder Heckklappe.

In der Montage von Rohkarossen von Automobilen werden Karosseriebleche, beispielsweise Karosserie-Seitenteile und Dächer, durch Laserstrahllöten oder Laserstrahlschweißen miteinander verbunden. Die miteinander zu verbindenden Karosseriebleche werden relativ zueinander in einer Fügeposition gespannt und anschließend verlötet oder verschweißt. In modernen Fertigungslinien steht für den Löt- oder Schweißprozess nur begrenzt Zeit zur Verfügung, worunter die Qualität der zu erzeugenden Löt- oder Schweißnaht leidet. Andererseits muss die Löt- oder Schweißnaht dicht sein und eine glatte äußere Oberfläche aufweisen. Insbesondere darf die Naht nicht von Schlauchporen durchdrungen sein.

Ein Verfahren und eine Vorrichtung zum Laserstrahllöten oder Laserstrahlschweißen sind beispielsweise aus der DE 100 06 852 C5 bekannt. Ein Löt- oder Schweißdraht, aus dem die Löt- oder Schweißnaht erzeugt wird, dient gleichzeitig als Kontaktfühler, mittels dem die Vorrichtung bei Ausführung des Verfahrens längs einer zwischen den zu verbindenden Werkstückteilen gebildeten Fuge geführt wird. Weitere Verfahren und Vorrichtungen werden in der DE 198 03 734 C2 und der DE 10 2004 028 787 A1 beschrieben.

Es ist eine Aufgabe der Erfindung, trotz der in Serienfertigungen nur begrenzt zur Verfügung stehenden Zeit die Herstellung einer die Bauteile verbindenden, qualitativ hochwertigen Löt- oder Schweißnaht zu ermöglichen.

Die Aufgabe wird durch die Merkmale des Anspruchs 1 gelöst. In einem ersten Prozessschritt wird längs einer von den zu verbindenden Bauteilen gebildeten Fuge durch Schmelzen eines Verbindungsmaterials eine die Geometrie des gewünschten Bauteilverbunds fixierende, in diesem Sinne geometriebildende Fixiernaht erzeugt. Das Verbindungsmaterial ist vorzugsweise ein Löt- oder Schweißmaterial, das als Zusatzwerkstoff zugeführt wird. Grundsätzlich kann die Fixiernaht jedoch auch durch Verschmelzen nur eines Grundwerkstoffs der Bauteile erzeugt werden, indem die Bauteile selbst das Verbindungsmaterial liefern. In einem nachfolgenden zweiten Prozessschritt wird in einer bevorzugten ersten Variante durch Schmelzen eines Verbindungsmaterials eine volumenbildende Lage dieses Verbindungsmaterials aufgetragen, d.h. aufgeschmolzen. Die Verbindungsmaterialien der beiden Prozessschritte sollten zumindest nahe beieinander liegende Schmelzpunkte aufweisen und einander metallurgisch auch sonst soweit ähnlich sein, dass sie sich bei dem Auftragen der volumenbildenden Lage stofflich fest miteinander verbinden. Vorzugsweise wird in den beiden Prozessschritten das gleiche Verbindungsmaterial verwendet. Die beiden Prozessschritte können längs der gleichen Fuge gleichzeitig ausgeführt werden, beispielsweise mit einem vorlaufenden und einem nachlaufenden Werkzeug. Bevorzugter werden die beiden Prozessschritte jedoch separat durchgeführt, indem der zweite Prozessschritt längs der gleichen Fuge erst nach vollständiger Ausführung des ersten Prozessschritts vorgenommen wird. Anstatt in dem zweiten Prozessschritt weiteres Verbindungsmaterial auf die zuvor geschaffene Fixiernaht aufzuschmelzen, besteht der zweite Prozessschritt in einer alternativen zweiten Verfahrensvariante nur in einem Umschmelzen der Fixiernaht ohne zusätzlichen Materialauftrag. In der zweiten Variante wird die Fixiernaht mittels Zusatzwerkstoff erzeugt und im zweiten Prozessschritt dieses Verbindungsmaterial der Fixiernaht soweit erwärmt, dass es sich zumindest über seine gesamte äußere Oberfläche und einen oberflächennahen Tiefenbereich verdichtet und zumindest in dem verdichteten Tiefenbereich ein Materialgefüge aufweist, das hinsichtlich der Porosität und auch im übrigen die an die Löt- oder Schweißnaht gestellten Qualitätsanforderungen erfüllt, insbesondere eine glatte Oberfläche bildet und zumindest keine die Fertignaht durchdringenden Schlauchporen, sondern allenfalls geschlossene Poren aufweist. Die Erfindung umfasst im Ergebnis wenigstens zwei Prozessschritte, und es wird in wenigstens einem dieser Prozessschritte Verbindungsmaterial in Form eines Zusatzwerkstoffes zugeführt und in dem betreffenden Prozessschritt geschmolzen. In bevorzugten Ausführungen wird sowohl im ersten Prozessschritt als auch im zweiten Prozessschritt ein Verbindungsmaterial als Zusatzwerkstoff zugeführt.

Die Fixiernaht muss lediglich die Bauteile relativ zueinander in einer Fügeposition fixieren und kann daher von allen weiteren Funktionen entlastet werden. Sie muss insbesondere nicht bereits die Anforderungen hinsichtlich der Porosität erfüllen. Dementsprechend kann die Fixiernaht mit einer größeren Fortschrittsgeschwindigkeit erzeugt werden als herkömmliche Löt- oder Schweißnähte, die als Fertignaht in nur einem einzigen Prozessschritt hergestellt werden. Die Fixiernaht könnte in Erfüllung ihrer geometriebildenden Funktion grundsätzlich als Heftnaht bzw. Steppnaht, d.h. als diskontinuierliche Naht mit Unterbrechungen ausgeführt werden, bevorzugt wird sie jedoch als kontinuierliche Naht erzeugt. Da an die Güte des Materialgefüges der Fixiernaht, insbesondere der Porenfreiheit oder zumindest Porenarmut, keine besonderen Anforderungen gestellt werden müssen, kann die Fixiernaht vorteilhafterweise kontinuierlich in Längsrichtung der Fuge durchgehend erzeugt werden. Wird die Fixiernaht als Steppnaht erzeugt, sind die Unterbrechungen in der Naht jedoch nur so lang, dass trotz der Unterbrechungen die geometriebildende Funktion erfüllt wird und gewährleistet ist, dass die Bauteile längs der Fuge nicht voneinander abklaffen können, wenn sie über die Fuge gesehen nur mittels der Fixiernaht aneinander gehalten werden. Die Fixiernaht ist zumindest in dem Sinne kontinuierlich und keine Heftnaht im weitesten Sinne. Die Erzeugung einer Geometrie bildenden Fixiernaht hat auch den Vorteil, dass die erfindungsgemäß bereits geometriebildend, d.h. im vorstehend genannten Sinne geometrieerhaltend gefügten Bauteile für die Fertigstellung der Naht nicht mehr gespannt werden müssen, sondern die Bauteile nach Erzeugung der Fixiernaht bereits entspannt werden können, so dass im nachfolgenden zweiten Prozessschritt ungehindert von Spannern einer Spanneinrichtung die volumenbildende Lage aufgetragen oder die Fixiernaht umgeschmolzen werden kann. Im Hinblick auf den Zeitdruck kommt vorteilhaft noch zum Tragen, dass es bei der Erzeugung der Fixiernaht nicht darauf ankommt, bei Verwendung von Zusatzwerkstoff das gesamte Volumen einer Fertignaht in die Fuge einzubringen. In der bevorzugten ersten Verfahrensvariante wird vorteilhafterweise sogar mehr Verbindungsmaterial bei der Erzeugung der volumenbildenden Lage eingebracht. Kann die Erzeugungsgeschwindigkeit für die Fixiernaht bereits wegen der reduzierten Qualitätsanforderung erhöht werden, so lässt sich durch Reduzierung des pro Längeneinheit einzutragenden Verbindungsmaterials die Erzeugungsgeschwindigkeit weiter steigern.

Die volumenbildende Lage oder das verdichtende Umschmelzen wird vorzugsweise mit einer im Vergleich zur Fixiernaht längs der Fuge geringeren Vorschubgeschwindigkeit erzeugt, die der für herkömmliche Verbindungsnähte üblichen Vorschubgeschwindigkeit entsprechen kann. Die volumenbildende Lage ist in der bevorzugt zweischichtigen Fertignaht die Decknaht und kann wegen der im Vergleich zur Fixiernaht geringeren Erzeugungsgeschwindigkeit bzw. Vorschubgeschwindigkeit mit einer sehr glatten äußeren Oberfläche und geringen Porosität erzeugt werden. Falls Löt- oder Schweißmaterial als Zusatzwerkstoff in zwei Schritten eingebracht wird, kann pro Prozessschritt auch das in die Fuge einzubringende Löt- oder Schweißmaterial verringert werden, wodurch die volumenbildende Lage, grundsätzlich auch die Fixiernaht, mit höherer Erzeugungsgeschwindigkeit, aber gleicher Qualität wie herkömmliche Nähte oder bei gleicher Erzeugungsgeschwindigkeit in höherer Qualität erzeugt werden kann oder können. Im Falle der Fixiernaht wird dieser Zugewinn an Flexibilität bevorzugt in eine höhere Erzeugungsgeschwindigkeit umgesetzt, während für die volumenbildende Lage einer Steigerung der Qualität der Vorzug gegeben wird.

Der Begriff der Fuge wird im Sinne der Erfindung weit gefasst, ist vorzugsweise aber eine Stoßfuge oder Nullfuge, längs der die Bauteile aneinanderstoßen. So kann die Fuge eine V-Form haben, ferner kann es sich um beispielsweise einen überlappenden Stoß, einen Eckstoß, oder gegebenenfalls auch einen Mehrfachstoß von Bauteilen handeln. Die Fertignaht kann dementsprechend beispielsweise eine V-Naht, eine Kehlnaht oder eine sonstige Nahtform sein. Die Fuge kann somit in grundsätzlich jeder Form zwischen einander zugewandten Flanken der zu verbindenden Bauteile gebildet sein. Die betreffenden Flanken bilden die Fugenränder.

Als Löt- oder Schweißverfahren kommt vorzugsweise das Laserstrahllöten oder Laserstrahlschweißen zum Einsatz. Alternativ können jedoch auch andere Verfahren verwendet werden, bei denen das jeweilige Verbindungsmaterial mittels eines Energiestrahls geschmolzen wird. Alternativen zum Laserstrahlfügen sind beispielsweise das Löten oder Schweißen mittels Elektronen- oder Plasmastrahl. Grundsätzlich kann zum Schmelzen des Verbindungsmaterials auch ein Lichtbogen verwendet werden, der im weiteren Sinne ebenfalls als Energiestrahl verstanden wird.

Als Löt- oder Schweißmaterial können insbesondere Cu-Basislegierungen, Al-Basislegierungen oder Fe-Basislegierungen verwendet werden. Cu-Basislegierungen kommen in erster Linie zum Löten von Stahlbauteilen und Fe-Basislegierungen zum Schweißen in Frage.

Die Fixiernaht wird in bevorzugten Ausführungen mit einer in Längsrichtung der Fuge gemessenen Geschwindigkeit erzeugt, die wenigstens um den Faktor 1.5 größer als die Geschwindigkeit ist, mit der die volumenbildende Lage erzeugt oder die Fixiernaht umgeschmolzen wird. Die Erzeugungsgeschwindigkeit der Fixiernaht kann vorteilhafterweise sogar doppelt so groß wie die Erzeugungsgeschwindigkeit der volumenbildenden Lage oder der umgeschmolzenen Fixiernaht sein oder gegebenenfalls noch größer. Da es bei der Fixiernaht im Extremfall nur darum geht, aus den Bauteilen einen festen im Hinblick auf die Geometrie nicht mehr veränderlichen Verbund herzustellen, kann die Erzeugungsgeschwindigkeit der Fixiernaht vorteilhafterweise größer als 3 m/min. sein, was allgemein als obere Grenze für herkömmlich hergestellte Verbindungsnähte gilt, da bei größeren Geschwindigkeiten die an Fertignähte zu stellenden Qualitätsanforderungen nur noch mit besonderem, die Kosten erhöhenden Aufwand erfüllbar sind. Die Fixiernaht kann nach der Erfindung durchaus mit einer Fortschrittsgeschwindigkeit von bis zu 6 m/min oder sogar darüber aufgetragen werden.

In der bevorzugten Variante, in der auf die Fixiernaht die volumenbildende Lage aufgebracht wird, kommt vorteilhaft auch noch zum Tragen, dass die Fugenränder bei der Erzeugung der Fixiernaht automatisch gereinigt und die Qualität der volumenbildenden Lage dadurch nochmals gesteigert wird. Um diesen Vorteil im zweiten Prozessschritt ungeschmälert nutzen zu können, wird ein den zweiten Prozessschritt ausführendes Fügewerkzeug in bevorzugten Ausführungen längs der Fuge taktil in solch einer Weise geführt, dass ein für die taktile Führung vorgesehener Kontaktfühler die zuvor erzeugte Fixiernaht nicht berührt, sondern nur an den einander zugewandten Fugenrändern abfährt, d.h. im Führungskontakt lediglich den linken und den rechten Fugenrand kontaktiert, zu der Fixiernaht jedoch einen lichten Abstand aufweist. Alternativ zu einer derartigen Zweipunktführung, wobei der Kontakt auch linienförmig oder in einem schmalen Streifen stattfinden kann, könnte beispielsweise auch das aus der DE 100 06 852 C5 bekannte Werkzeug verwendet werden. Der Einsatz eines herkömmlichen Kontaktfühlers ist grundsätzlich ebenfalls denkbar, obgleich dann eher die Gefahr einer Teilverschmutzung der zuvor durch den ersten Prozessschritt gereinigten Fügeumgebung besteht. Die bevorzugte Zweipunktführung kann mit Vorteil auch für die Führung eines den ersten Prozessschritt ausführenden Fügewerkzeugs realisiert werden. Des Weiteren ist die Zweipunktführung auch für die zweite Verfahrensvariante, das Umschmelzen der Fixiernaht, von Vorteil. Der Kontaktfühler bildet an zwei einander gegenüberliegenden Außenseiten je eine Kontaktstelle, die vorzugsweise punkt- oder linienförmig oder gegebenenfalls streifenförmig ist. Die Kontaktstellen weisen in Querrichtung der Fuge voneinander einen Abstand auf, der größer ist als die ebenfalls in die Querrichtung gemessene Breite der äußeren Oberfläche der volumenbildenden Lage oder zumindest größer ist als die Breite der äußeren Oberfläche der zuvor erzeugten Fixiernaht. Falls das Fügewerkzeug wie bevorzugt mit einer Drahtzuführung für drahtförmiges Löt- oder Schweißmaterial ausgestattet ist, ist der Abstand zwischen den Kontaktstellen des Kontaktfühlers größer als die Dicke des Drahts; vorzugsweise ist sie um wenigstens den Faktor 1.5 größer als die Dicke des Drahts.

Der Bauteilverbund umfasst wenigstens zwei Bauteile und eine die Bauteile miteinander verbindende Löt- oder Schweißnaht. Die erfindungsgemäß erzeugte Löt- oder Schweißnaht ist entsprechend der bevorzugten ersten Verfahrensvariante mehrlagig, kann aber in der zweiten Verfahrensvariante auch nur einlagig sein. Die mehrlagige Variante ist bevorzugt genau zweilagig mit einer von dem Verbindungsmaterial der Fixiernaht gebildeten unteren Lage und einer von der volumenbildenden Lage und einem Teil der Fixiernaht gebildeten Decklage. Ein Charakteristikum der mehrlagigen Fertignaht ist eine im Querschnitt der Naht erkennbare Schmelzlinie. Die Schmelzlinie entsteht durch das Auftragen der volumenbildenden Lage. Bei dem Auftragen wird das Verbindungsmaterial der Fixiernaht zumindest in einem an die volumenbildende Lage grenzenden Tiefenbereich umgeschmolzen. Die Schmelzlinie trennt den umgeschmolzenen Tiefenbereich von dem noch darunter liegenden restlichen Tiefenbereich der Fixiernaht. Die in der zweiten Verfahrensvariante hergestellte Fertignaht kann ebenfalls eine Schmelzlinie aufweisen, falls nämlich das Verbindungsmaterial der Fixiernaht bei dem Umschmelzen nicht vollständig umgeschmolzen wurde, sondern nur in dem an die Oberfläche der Fixiernaht grenzenden Tiefenbereich. Die nach einer der beiden Verfahrensvarianten erzeugte Fertignaht weist zumindest von ihrer Oberfläche bis zu der Schmelzlinie eine sehr geringe Porosität auf. Insbesondere enthält sie keinerlei Schlauchporen, sondern allenfalls geschlossene Poren. Die größten der gegebenenfalls noch vorhandenen Poren haben jeweils maximal das Volumen einer Kugel mit einem Durchmesser von 0.3 mm, vorzugsweise 0.2 mm.

Die Erfindung, die wie eingangs erwähnt in der Serienfertigung zum Einsatz gelangt, hat schließlich auch eine Fertigungslinie zum Fügen von Bauteilen, gemäß Anspruch 8, vorzugsweise von Karosserieteilen von Fahrzeugen zum Gegenstand. Dokument EP 1 029 774 A offenbart eine Fertigungslinie gemäß dem Oberbegriff des Anspruchs 8. In derartigen Fertigungslinien werden Gruppen von miteinander zu fügenden Bauteilen, beispielsweise ein Bodenteil, Seitenteile und ein Dach einer Karosserie, längs einer Förderlinie nacheinander durch Fügestationen oder sonstige Arbeitsstationen gefördert und sukzessive gefügt oder anderweitig bearbeitet. Die miteinander zu fügenden Bauteile werden in einer Geometriestation mit Hilfe einer Spanneinrichtung relativ zueinander in einer Fügeposition gespannt, die sie relativ zueinander in dem zu schaffenden Bauteilverbund einnehmen sollen. Die jeweilige Bauteilgruppe wird im gespannten Zustand durch Schweißen oder Löten dauerhaft fest gefügt. Nach dem Fügen wird die Spanneinrichtung vom Bauteilverbund gelöst, so dass dieser in der Förderlinie zur nächsten Arbeitsstation weitergefördert werden kann. Die Geometriestation verfügt für das Fügen über einen oder mehrere Roboter, an dessen oder deren Roboterarm oder Roboterarmen ein oder mehrere Fügewerkzeuge angeordnet ist oder sind, im Falle der Erfindung jeweils ein Energiestrahl-Lötwerkzeug oder ein Energiestrahl-Schweißwerkzeug zur Erzeugung einer Löt- oder Schweißnaht. Die Enden der Roboterarme dienen als frei im Raum bewegliche Aktoren. Die Spanneinrichtung bildet Störkonturen für den Fügeprozess. Des Weiteren ist die Verweildauer oder Durchschleusdauer der jeweiligen Bauteilgruppe in oder durch die Geometriestation nur kurz bemessen, typischerweise im Bereich von etwa einer Minute. Ein großer Teil dieser Zeit wird für das Spannen der Bauteile benötigt. In den meisten Anwendungen wird während des Transports nicht gespannt, so dass auch noch die Zeit für den Transport in und aus der Geometriestation zu berücksichtigen ist. Dem Fügeprozess steht nur noch die verbleibende Restzeit zur Verfügung.

Hier setzt die Erfindung an und erzeugt in der zur Verfügung stehenden Zeit die Fixiernaht.

Die Geometriestation verfügt über wenigstens einen im Raum beweglichen ersten Aktor, den vorzugsweise ein Roboter bildet. Der erste Aktor ist mit einem ersten Werkzeugkopf bestückt. Der erste Werkzeugkopf ist ein Energiestrahl-Lötkopf oder -Schweißkopf zur Erzeugung der Fixiernaht. Das Verbindungsmaterial wird in Form eines Löt- oder Schweißdrahts oder vom Grundwerkstoff der Bauteile bereitgestellt. Wird mit Zusatzwerkstoff gefügt, umfasst der erste Werkzeugkopf eine Drahtführung, mittels welcher der Draht in Drahtlängsrichtung durch einen Austritt der Drahtzuführung in die Fuge führbar ist. Der Austritt kann die Drahtführung oder ein Führungsteil der Drahtführung bilden, bevorzugt ist eine Drahtführung auf dem Weg des Drahts vor dem Austritt vorgesehen. Der Werkzeugkopf umfasst des Weiteren einen in Richtung auf die Drahtspitze gerichteten ersten Energiestrahler zum Schmelzen des Verbindungsmaterials. Insoweit kann der erste Werkzeugkopf herkömmlichen Energiestrahl-Lötköpfen oder Energiestrahl-Schweißköpfen entsprechen. Der Draht ist vorzugsweise jedoch dünner als die herkömmlicherweise verwendeten Löt- oder Schweißdrähte. Vorzugsweise hat der Draht einen Durchmesser von höchstens 1.4 mm, während bislang Drähte mit einem Durchmesser von typischerweise 1.6 mm verwendet werden. 1.2 mm ist eine besonders bevorzugte Drahtdicke, die aber ohne weiteres bis 1.0 mm, gegebenenfalls auch darunter, verringert werden kann. In Förderrichtung der Förderlinie ist hinter der Geometriestation wenigstens ein im Raum beweglicher zweiter Aktor angeordnet und mit einem zweiten Werkzeugkopf bestückt. Mit dem zweiten Werkzeugkopf wird der zweite erfindungsgemäße Prozessschritt ausgeführt. Der zweite Werkzeugkopf umfasst zumindest einen zweiten Energiestrahler. Falls in dem zweiten Prozessschritt die volumenbildende Lage aufgetragen wird, umfasst auch der zweite Werkzeugkopf eine Drahtführung und einen Austritt für den Löt- oder Schweißdraht, aus dem die geometriebildende Lage gebildet wird. Was den Energiestrahler und die Drahtführung sowie den Draht als solchen anbetrifft, können die beiden Werkzeugköpfe gleich ausgebildet sein. Falls in dem zweiten Prozessschritt die Fixiernaht nur umgeschmolzen wird, kann die Drahtführung beim zweiten Werkzeugkopf entfallen.

Die jeweilige Bauteilgruppe steht während des Spannens und Lötens oder Schweißens in der Geometriestation vorzugsweise still. Alternativ kann die Förderlinie sie jedoch auch kontinuierlich oder mit zeitweise reduzierter Geschwindigkeit durch die Geometriestation fördern. Wird die Bauteilgruppe während des Aufenthalts in der Geometriestation weiter gefördert, ist eine entsprechend mobile Spanneinrichtung vorzusehen.

Der zweite Werkzeugkopf ist in bevorzugten Ausführungen mit dem beschriebenen Kontaktfühler ausgestattet, um den zweiten Werkzeugkopf taktil längs der Fuge zu führen, ohne die Fixiernaht zu berühren. Solch einer Ausführung wird für den zweiten Werkzeugkopf in Bezug auf beide Verfahrensvarianten bevorzugt.

Der zweite Aktor mit dem zweiten Werkzeugkopf kann an beliebiger Stelle hinter der Geometriestation angeordnet sein. So kann oder können zwischen der Geometriestation und dem zweiten Aktor eine oder mehrere andere Arbeitsstation(en) oder eine oder mehrere reine Pufferstation(en) längs der Förderlinie angeordnet sein. Der zweite Aktor mit dem zweiten Werkzeugkopf kann Bestandteil solch einer Arbeitsstation oder insbesondere einer Pufferstation sein, so dass in der betreffenden Station der zweite Prozessschritt des erfindungsgemäßen Verfahrens allein oder in Kombination mit einer anderen Arbeit durchgeführt wird. Vorzugsweise ist eine eigene Fügestation nur für den zweiten Prozessschritt vorgesehen. Auch für den zweiten Prozessschritt gilt, dass der durch die Fixiernaht bereits zusammengehaltene Bauteilverbund zwar bevorzugt in der betreffenden Fügestation still steht, eher noch als bei dem ersten Prozessschritt kann der Bauteilverbund jedoch während der Ausführung des zweiten Prozessschrittes auch weiter gefördert werden.

Obgleich der jeweilige Energiestrahler gleichzeitig auch ein Energiestrahlerzeuger und dementsprechend solch ein Energiestrahlerzeuger ebenfalls Bestandteil des betreffenden Werkzeugkopfs sein kann, entspricht es bevorzugten Ausführungen, wenn der Energiestrahl nicht auf oder in dem Werkzeugkopf, sondern separat von diesem an anderer Stelle erzeugt wird. Der von dem Werkzeugkopf getrennte Energiestrahlerzeuger, vorzugsweise Laserstrahlerzeuger, ist mittels einer Energieübertragungseinrichtung, vorzugsweise über einen Lichtwellenleiter, mit dem Werkzeugkopf und dessen Energiestrahler verbunden. Der Werkzeugkopf verfügt über einen entsprechenden Anschluss zum Einkoppeln der vom Energiestrahlerzeuger erzeugten Energie, vorzugsweise Laserenergie. Werden mehrere Werkzeugköpfe eingesetzt, wie vorstehend am Beispiel der Fertigungslinie beschrieben, kann zwar für jeden der Werkzeugköpfe ein eigener Energiestrahlerzeuger vorgesehen sein, bevorzugt sind jedoch mehrere Werkzeugköpfe, beispielsweise der genannte erste Werkzeugkopf und der genannte zweite Werkzeugkopf, je über eine Energieübertragungseinrichtung mit einem für die betreffenden Werkzeugköpfe gemeinsam vorgesehenen Energiestrahlerzeuger verbunden. Solch eine die mehreren Werkzeugköpfe und den gemeinsamen Laserstrahlerzeuger umfassende Vorrichtung verfügt vorzugsweise über die Fähigkeit, jeweils wahlweise einen der Werkzeugköpfe bzw. deren Energiestrahler mit der benötigten Energie zu versorgen. Bei mehr als zwei Werkzeugköpfen können auch mehrere Gruppen von Werkzeugköpfen gebildet werden, die von einem gemeinsamen Energiestrahlerzeuger versorgt werden, wobei die den Energiestrahlerzeuger und die mehreren Gruppen von Werkzeugköpfen umfassende Vorrichtung ebenfalls vorzugsweise über die Fähigkeit verfugt, jeweils wahlweise eine der Gruppen mit der benötigten Energie zu versorgen.

Nachfolgend werden Ausführungsbeispiele der Erfindung anhand von Figuren erläutert. An den Ausführungsbeispielen offenbar werdende Merkmale bilden je einzeln und in jeder Merkmalskombination die Gegenstände der Ansprüche und auch die vorstehend beschriebenen Ausgestaltungen vorteilhaft weiter. Es zeigen:
- Figur 1: einen Bauteilverbund mit einer Fixiernaht nach einer ersten Variante,
- Figur 2: den Bauteilverbund mit einer Fertignaht nach der ersten Variante,
- Figur 3: einen Bauteilverbund mit einer Fixiernaht nach einer zweiten Variante,
- Figur 4: den Bauteilverbund mit einer Fertignaht nach der zweiten Variante,
- Figur 5: einen Werkzeugkopf zum Laserstrahllöten oder Laserstrahlschweißen,
- Figur 6: einen Kontaktfühler des Werkzeugkopfs und
- Figur 7: eine Fertigungslinie zum Fügen von Bauteilen.

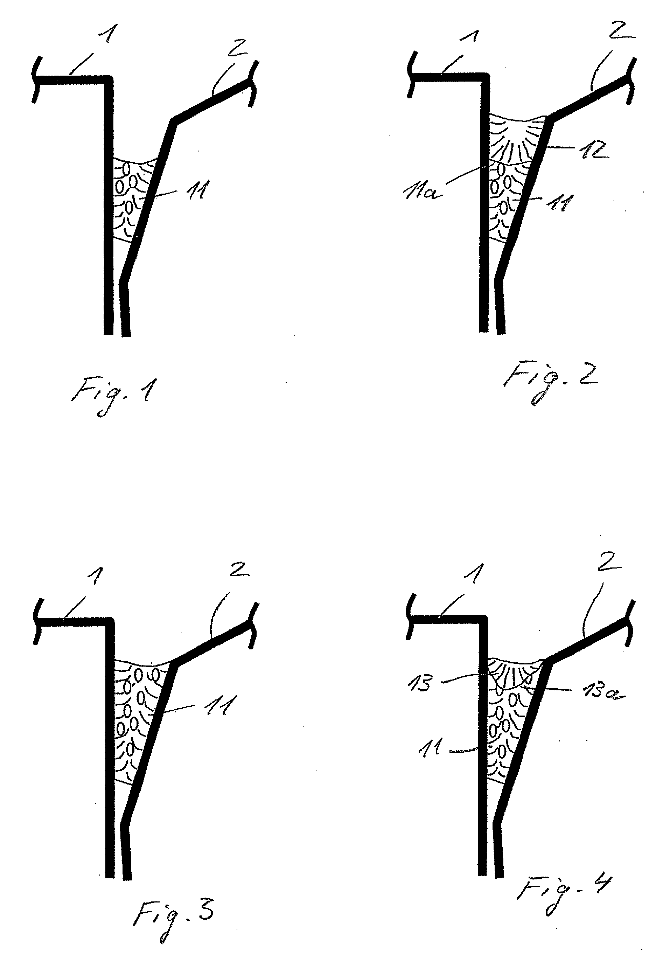

Figur 1 zeigt in einem Querschnitt einen Bauteilverbund aus zwei Bauteilen 1 und 2 und einer Fixiernaht 11. Die Fixiernaht 11 verbindet die Bauteile 1 und 2 längs einer gemeinsam gebildeten Fuge. Von den Bauteilen 1 und 2 sind nur die beiden Flanken gezeichnet, die zwischen sich die Fuge und dementsprechend die Fugenränder bilden. Das Bauteil 1 ist beispielsweise eine Seitenwand und das Bauteil 2 ein Dachblech einer Rohkarosse eines Automobils. Das Bauteil 1 bildet mit seiner dem Bauteil 2 zugewandten Flanke relativ zu dem Bauteil 2 einen Stufensprung. Am Fugengrund sind die Bauteile 1 und 2 auf Stoß. Die Fixiernaht 11 besteht aus einem Lötmaterial, beispielsweise einer Cu-Legierung oder einer Al-Legierung. Die Fixiernaht 11 verbindet die Bauteile 1 und 2 dauerhaft fest miteinander und wirkt in diesem Sinne für den Bauteilverbund geometriebildend.

Figur 2 zeigt den Bauteilverbund, nachdem auf die Fixiernaht 11 der Figur 1 eine Decklage 12 aus Lötmaterial durch Schmelzen aufgetragen wurde. Zum Aufschmelzen der Decklage 12 wird das gleiche Lötmaterial wie für die Fixiernaht 11 verwendet.

Die Fixiernaht 11 und die Decklage 12 werden in einer ersten Verfahrensvariante in zwei Prozessschritten gebildet. Figur 1 zeigt das Ergebnis des ersten Prozessschritts, und Figur 2 zeigt das Ergebnis des zweiten Prozessschritts. Vor Ausführung des ersten Prozessschritts werden die Bauteile 1 und 2 in der gewünschten Fügeposition relativ zueinander gespannt. Im Ausführungsbeispiel liegen sie wie dargestellt auf Stoß, d.h. sie werden kraftschlüssig gegeneinander gespannt, was einem alternativ ebenfalls möglichen rein formschlüssigen Spannen vorzuziehen ist. Die in der Fügeposition gespannten Bauteile 1 und 2 bilden zwischen den einander zugewandten Bauteilflanken die im Querschnitt dargestellte Fuge.

In dem ersten Prozessschritt wird in der Fuge die geometriebildende Fixiernaht 11 durch Abschmelzen des Lötmaterials erzeugt, im Ausführungsbeispiel durch Laserstrahllöten. Das Material der Fixiernaht 11 bildet in der fertigen Verbindungsnaht 11, 12 eine untere Lage, die in Figur 2 ebenfalls mit 11 bezeichnet ist. In dem zweiten Prozessschritt wird, im Ausführungsbeispiel ebenfalls durch Laserstrahllöten, die Decklage 12 auf die Fixiernaht 11 aufgetragen. Bei dem Abschmelzen und Auftragen der Schmelze wird die Fixiernaht 11 zumindest an der Oberfläche und in einem oberflächennahen Tiefenbereich ebenfalls geschmolzen und dadurch in dem betreffenden Tiefenbereich bis zu einer Schmelzlinie 11a verdichtet. Von der im ersten Prozessschritt erzeugten Fixiernaht befindet sich somit ein Teil über der Schmelzlinie 11a. Dieser Teil wird nach der Erstarrung im Sinne der Erfindung der Decklage 12 zugerechnet. Die Schmelzlinie 11a trennt nicht das bei der Erzeugung der Fixiernaht in die Fuge eingebrachte Lötmaterial von dem im zweiten Prozessschritt eingebrachten Lötmaterial. An der Schmelzlinie stoßen vielmehr zwei voneinander unterscheidbare Gefüge bzw. Phasen aneinander, nämlich die vergleichsweise poröse Phase der Fixiernaht 11, die in der Fertignaht die untere Lage 11 bildet, und die demgegenüber deutlich weniger poröse Phase der Decklage 12, die zum größten Teil von dem im zweiten Prozessschritt eingebrachten Lötmaterial und zu einem kleineren Teil von dem umgeschmolzenen Lötmaterial der Fixiernaht 11 gebildet wird. Nach der Erstarrung kann auch von zwei Schichten 11 und 12 gesprochen werden, um die durch die Schmelzlinie 11a voneinander getrennten Phasen begrifflich von den sukzessive aufgebrachten Lagen 11 und 12 zu unterscheiden. Die Fixiernaht 11 wird in dem ersten Prozessschritt längs der Fuge fortschreitend mit deutlich größerer Geschwindigkeit erzeugt als die Decklage 12, so dass die Fixiernaht 11 nach der Erstarrung und vor dem Auftragen der Decklage 12 eine beachtliche Porosität aufweist. Die vergleichsweise große Porosität wird jedoch zumindest in dem oberflächennahen Tiefenbereich der Fixiernaht bis zu der Schmelzlinie 11a drastisch reduziert. Die Materialfehler der Fixiernaht 11 werden dort durch das Auftragen der Decklage 12 geheilt.

Figur 3 zeigt einen aus zwei Bauteilen 1 und 2 und einer Fixiernaht 11 gebildeten Bauteilverbund, der mit Ausnahme der Fixiernaht 11 dem Ausführungsbeispiel der Figur 1 entspricht.

Figur 4 zeigt die Anordnung der Figur 3 nach Umwandlung der Fixiernaht 11 in eine fertige Verbindungsnaht bzw. Fertignaht 11, 13. Die Fertignaht 11, 13 wurde ebenfalls in zwei Prozessschritten, allerdings in einer zweiten Verfahrensvariante erzeugt. In der zweiten Verfahrensvariante wird Lötmaterial nur in dem ersten Prozessschritt eingetragen. Es wird somit in einem einzigen Prozessschritt bei der Erzeugung der geometriebildenden Fixiernaht 11 gleichzeitig auch das gesamte Lötmaterial eingetragen, das in der ersten Verfahrensvariante auf zwei Prozessschritte verteilt eingetragen wird. Unter Vernachlässigung der an das Materialgefüge der Fertignaht 11, 13 zu stellenden Qualitätsanforderungen wird die Fixiernaht 11 auch in der zweiten Verfahrensvariante mit einer in Längsrichtung der Fuge gemessenen Erzeugungsgeschwindigkeit gebildet, die höher als bei herkömmlichen Energiestrahl-Lötverfahren gleicher Art, im Ausführungsbeispiel Laserstrahllötverfahren, ist. Die Fixiernaht 11 wird im zweiten Prozessschritt umgeschmolzen und dadurch von der Oberfläche aus bis zu einer Schmelzlinie 13a verdichtet. In der Schicht 13 zwischen der freien Oberfläche und der Schmelzlinie 13a weist die Fertignaht 11, 13 ein ähnlich vorteilhaftes Materialgefüge wie die Decklage oder Deckschicht 12 des ersten Ausführungsbeispiels auf. Unter der Schmelzlinie 13a entspricht die Porosität derjenigen der Fixiernaht 11. Der Unterschied der Phasen 11 und 12 einerseits und 11 und 13 andererseits, insbesondere hinsichtlich der Porosität, kann in beiden Verfahrensvarianten im Schliffbild mit bloßem Auge oder zumindest unter dem Mikroskop erkannt werden.

Bei dem Abkühlen der Fixiernaht 11 beginnt das Kornwachstum an den beiden Flächenbereichen der Bauteile 1 und 2, die mit dem geschmolzenen Lötmaterial, d. h. der Schmelze, in Kontakt sind. Das Komwachstum beginnt an den betreffenden Grenzflächen und setzt sich in die Schmelze hinein fort. Die Fortschrittsrichtung weist zunächst von der jeweiligen Grenzfläche aus in die Schmelze hinein und neigt sich mit zunehmendem Fortschritt immer stärker zur freien Oberfläche, wie in den Figuren 1 und 3 schematisch angedeutet ist. In Abhängigkeit von der Fortschrittsgeschwindigkeit beim Auftrag sind in der so erhaltenen Phase der Fixiernaht 11 mehr oder weniger große Poren enthalten. Bei dem Auftragen der Decknaht 12 wird die Fixiernaht 11 an ihrer freien Oberfläche aufgeschmolzen. Die Gefügefehler, insbesondere Poren, werden zumindest im aufgeschmolzenen Tiefenbereich geheilt. Bei dem Abkühlen, das wegen der geringeren Auftragsgeschwindigkeit der Decklage 12 langsamer vonstatten geht als das Abkühlen der Fixiernaht 11, ist das Kornwachstum entsprechend verlangsamt. Das bereits in der Fixiernaht 11 vorhandene Lötmaterial nimmt Wärme auf. Das Komwachstum findet somit von der Schmelzlinie 11a oder 13a, über die gesamte Naht gesehen von der jeweiligen Schmelzfläche, und den beiden seitlichen Grenzflächen der Bauteile 1 und 2 aus in Richtung auf die freie Oberfläche statt. In den Figuren 2 und 4 ist das sich in den Deckschichten 12 und 13 entsprechend dem Kornwachstum einstellende Gefüge qualitativ dargestellt.

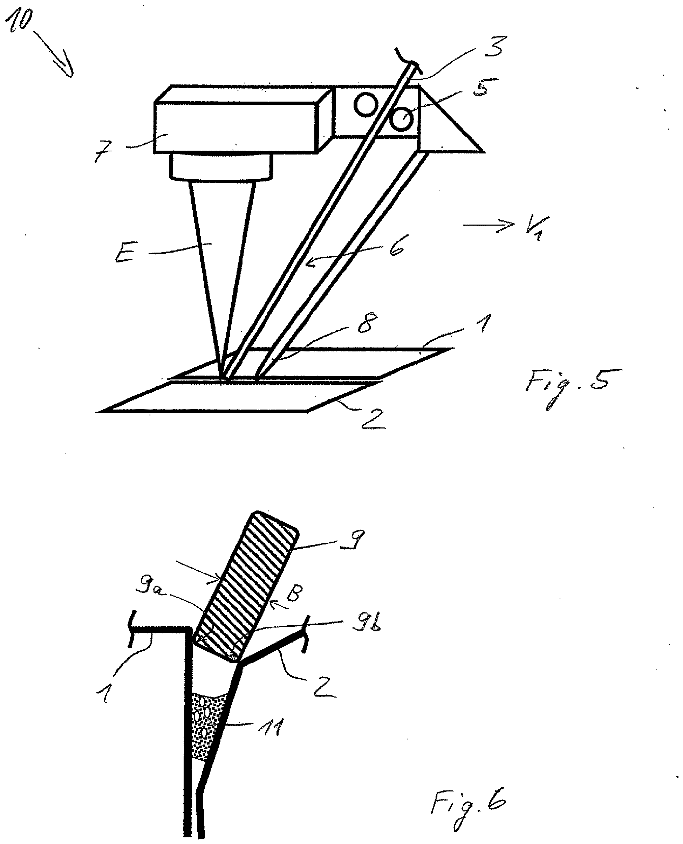

Figur 5 zeigt in schematischer Darstellung einen Werkzeugkopf 10. Der Werkzeugkopf 10 ist an einem im Raum frei bewegbaren Aktor befestigbar. Insbesondere kann ein Ende eines Roboterarms den Aktor bilden. Der Werkzeugkopf 10 umfasst eine Drahtführung 5 für einen Lötdraht 3, einen Energiestrahler 7 zur Erzeugung eines Energiestrahls E und einen Kontaktfühler 8 für eine taktile Führung des Werkzeugkopfs 10 in Längsrichtung der von den Bauteilen 1 und 2 gebildeten Fuge. Die Drahtführung 5 des Ausführungsbeispiels wird von zwei Rollen gebildet, zwischen denen der Lötdraht 3 hindurch auf einen Austritt 6 zu gefördert wird, von dem in Figur 5 nur der geometrische Ort mittels des Bezugszeichens 6 angedeutet ist. Der Lötdraht 3 wird dem Werkzeugkopf 10 von einem außerhalb des Werkzeugskopfs 10 angeordneten Drahtspeicher mittels einer vorzugsweise ebenfalls außerhalb des Werkzeugskopfs 10 angeordneten Fördereinrichtung zugefördert. Der Drahtspeicher ist vorzugsweise in einer Arbeitsstation des Aktors ortsfest angeordnet. Die Fördereinrichtung kann am Aktor oder in der Arbeitsstation an anderer Stelle angeordnet sein. Bei dem Löten wird der Lötdraht 3 mittels der Fördereinrichtung von dem beispielsweise als Rolle gebildeten Drahtspeicher abgewickelt, dem Werkzeugkopf 10 zugefördert und in Drahtlängsrichtung durch den Austritt 6 in die Fuge gefördert. Der Energiestrahler 7 richtet den Energiestrahl E in Richtung auf die Fuge, genauer gesagt auf den Ort, an dem das durch den Austritt 6 tretende freie Ende des Lötdrahts 3 geschmolzen werden soll. Der Werkzeugkopf 10 wird bei dem Löten in Prozessrichtung mit einer konstanten Geschwindigkeit V1 längs der Fuge bewegt. Dabei wird der Lötdraht 3 kontinuierlich abgeschmolzen und über die Drahtführung 5 nachgefördert. Der Kontaktfühler 8 ist dem Austritt 6 und dem Fokus des Laserstrahlers 7 vorlaufend angeordnet. Der Kontaktfühler 8 kann als herkömmlicher Führungsfinger gebildet sein, der im Grund der Fuge deren Verlauf abtastet und den Werkzeugkopf 10, insbesondere den Energiestrahler 7, dem Verlauf der Fuge folgend führt. Der mit einem herkömmlichen Kontaktfühler 8 ausgestattete Werkzeugkopf 10 eignet sich insbesondere für die Erzeugung der Fixiernaht 11 der beiden Verfahrensvarianten.

Figur 6 zeigt in einem Querschnitt einen modifizierten Kontaktfühler 9, wie er sich insbesondere zur Erzeugung der Decklage 12 der ersten Verfahrensvariante und zum Umschmelzen der zweiten Verfahrensvariante eignet. Der Werkzeugkopf zur Erzeugung der Decklage 12 kann mit Ausnahme des modifizierten Kontaktfühlers 9 dem Werkzeugkopf 10 entsprechen. Wird mit dem modifizierten Werkzeugkopf nur der Umschmelzschritt der zweiten Verfahrensvariante durchgeführt, kann die Drahtführung 5 oder 5, 6 entfallen.

Der modifizierte Kontaktfühler 9 ist für eine Zweipunktführung geformt. Er weist an zwei voneinander abgewandten Außenseiten Kontaktstellen 9a und 9b auf. Im Führungskontakt kontaktiert der Kontaktfühler 9 mit seiner Kontaktstelle 9a den vom Bauteil 1 gebildeten, in Figur 6 linken Fugenrand und mit der Kontaktstelle 9b den vom Bauteil 2 gebildeten, in Figur 6 rechten Fugenrand. Voraussetzung für den stets beidseitigen Führungskontakt ist, dass die Fugenränder im Kontaktbereich einander zugewandt sind, d.h. in tangentialer Verlängerung gesehen zwischen sich einen Winkel von weniger als 180° einschließen. Diese Voraussetzung ist in den Ausführungsbeispielen bereits aufgrund des vom Bauteil 1 gebildeten Stufensprungs gegeben. Ähnliche Verhältnisse liegen bei Eckstößen oder einfach überlappenden Stößen von Bauteilen stets vor. In dem in Figur 6 dargestellten Fall wird unterstellt, dass die Decklage 12 der ersten Verfahrensvariante erzeugt wird. Dementsprechend zeigt Figur 6 den Zustand nach Herstellung der Fixiernaht 11. Der Kontaktfühler 9 ist im Querschnitt gesehen so breit, dass der Abstand B, den die Kontaktstellen 9a und 9b voneinander aufweisen, größer ist als die im gleichen Querschnitt gemessene Breite der Oberfläche der Fixiernaht 11. Auf diese Weise wird sichergestellt, dass der Kontaktfühler 9 im Führungskontakt mit den Fugenrändern stets einen lichten Abstand von der Fixiernaht 11 aufweist. Vorzugsweise ist der Abstand bzw. die Breite B auch größer als die freie Oberfläche der zu erzeugenden Decklage 12. Falls der Kontaktfühler 9 Bestandteil eines für das Umschmelzen der zweiten Verfahrensvariante vorgesehenen Werkzeugkopfs ist, ist der Abstand B größer als die freie Oberfläche der nach dieser Variante erzeugten Fixiernaht 11.

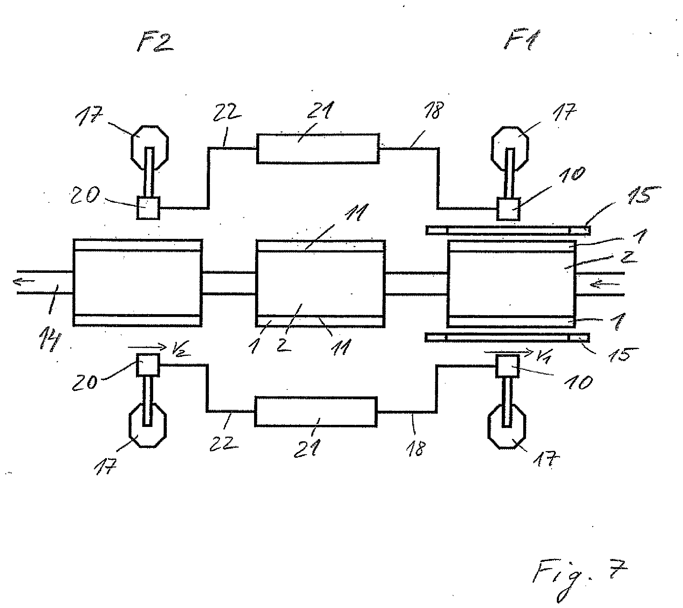

Figur 7 zeigt aus einer Fahrzeug-Fertigungslinie einen Abschnitt, in dem Gruppen von Bauteilen jeweils zu einem festen Bauteilverbund miteinander verbunden werden, im Ausführungsbeispiel zu einer Rohkarosse. Die einzelnen Bauteilgruppen umfassen einen Fahrzeugboden, Seitenteile 1 und Dachbleche 2, die gruppenweise auf Paletten in einer Förderlinie 14 durch die einzelnen Arbeitsstationen der Fertigungslinie gefördert und dort bearbeitet werden. In Figur 7 sind eine Geometriestation F1 und eine der Station F1 in Förderrichtung nachgeordnete Fügestation F2 dargestellt. Die Geometriestation F1 verfügt über eine Spanneinrichtung mit zu beiden Seiten der Förderlinie 14 angeordneten Säulen 15, die paarweise je über einen Querträger lösbar miteinander verbunden sein können. Die Spanneinrichtung 15 verfügt über Spannelemente zum Spannen der Bauteile 1 und 2. In der Geometriestation F1 werden die Bauteile der jeweiligen Gruppe relativ zueinander in der Fügeposition gespannt, in der sie anschließend dauerhaft fest miteinander verbunden werden. Hinsichtlich der Fertigungslinie 14 und das Spannen der Bauteile wird beispielhaft auf die EP 1 029 774 B1 hingewiesen. Nach Herstellen der dauerhaft festen Verbindung wird die Spanneinrichtung 15 gelöst und der dann fest gefügte Bauteilverbund weiter- und der Fügestation F2 zugefördert. Für das Spannen und dauerhaft feste Verbinden steht in der Geometriestation F1 eine gewisse Taktzeit zur Verfügung, beispielsweise 60 Sekunden. Innerhalb dieser Zeit müssen die zuvor nur lose gehefteten Bauteile 1 und 2 und die weiteren Bauteile der jeweiligen Bauteilgruppe relativ zueinander steif in der Fügeposition gespannt werden. Nehmen der Transport in und aus der Station F1 und das Spannen beispielsweise 35 Sekunden in Anspruch, stehen für den Fügeprozess noch 25 Sekunden zur Verfügung.

Neben der Förderlinie 14 sind in der Geometriestation F1 Roboter 17 angeordnet, an deren Roboterarmen je ein Werkzeugkopf 10 befestigt ist. Die Geometriestation F1 verfügt vorzugsweise über wenigstens zwei mit je einem Werkzeugkopf 10 bestückte Roboter 17, einen links und einen rechts der Förderlinie 14. Es können weitere mit Werkzeugköpfen 10 bestückte Roboter 17 in der Geometriestation F1 angeordnet sein. In der nach dem Spannen in der Geometriestation F1 noch verbleibenden Restzeit, im Beispielfall 25 Sekunden, werden die Bauteile 1 und 2 mittels den Werkzeugköpfen 10 durch Laserstrahllöten dauerhaft fest miteinander verbunden. Der Roboter 17 bewegt den Werkzeugkopf 10 programmgesteuert längs der von den Bauteilen 1 und 2 gebildeten Fuge. Während des Abfahrens der Fuge wird kontinuierlich am freien Ende des Lötdrahts 3 (Figur 5) Lötmaterial abgeschmolzen und in der Fuge abgelegt. Die längs der Fuge gemessene Vorschubgeschwindigkeit V1 ist so groß, dass innerhalb der zur Verfügung stehenden Restzeit über die gesamte Länge der Fuge die Fixiernaht 11 erzeugt werden kann. Nach Erzeugung der Fixiernaht 11 werden die Spanneinrichtung 15 gelöst und der nun dauerhaft fest gefügte Bauteilverbund weitergefördert.

In der nachgeordneten Fügestation F2, der Fertiglötstation, wird ein Bauteilverbund ausgelötet, der die Geometriestation F1 in einem vorhergehenden Taktzyklus durchlaufen hat. In der Fügestation F2 sind ist zu beiden Seiten der Förderlinie 14 je wenigstens ein weiterer Roboter 17 angeordnet. Die weiteren Roboter 17 sind je mit einem Werkzeugkopf 20 bestückt, der sich von dem Werkzeugkopf 10 der Geometriestation F1 nur in Bezug auf den Kontaktfühler unterscheidet. Der Werkzeugkopf 20 ist mit dem modifizierten Kontaktfühler 9 ausgestattet. Grundsätzlich kann auch der Werkzeugkopf 10 mit dem Kontaktfühler 9 ausgestattet sein, um alle für das Laserstrahllöten benötigten Werkzeugköpfe gleich auszubilden.

In der Fügestation F2 steht für den zweiten Prozessschritt des Auslötens, falls dort keine anderen Prozesse ausgeführt werden, die mit dem zweiten Prozessschritt kollidieren können, die volle Taktzeit, im angenommenen Beispielfall 60 Sekunden, abzüglich der Transportzeit zur Verfügung. Die Werkzeugköpfe 20 sind mit den Werkzeugköpfen 10 gekoppelt, zumindest sind die zur gleichen Seite der Förderlinie 14 angeordneten Werkzeugköpfe 10 und 20 miteinander gekoppelt. Die Kopplung erfolgt zu beiden Seiten der Förderlinie 14 je über einen gemeinsamen Energiestrahlerzeuger 21, im Ausführungsbeispiel Laserstrahlerzeuger. Die zwei Energiestrahlerzeuger 21 sind über Energieübertragungseinrichtungen 18 und 22, im Ausführungsbeispiel Lichtwellenleiter, mit dem wenigstens einen Werkzeugkopf 10 und dem wenigstens einen Werkzeugkopf 20 jeder Seite verbunden. Die von den Energiestrahlerzeugern 21 erzeugte Energie wird über die Energieübertragungseinrichtungen 18 und 22 zu den Energiestrahlern 7 der Werkzeugköpfe 10 und 20 übertragen. Um bei den Energiestrahlerzeugern 21 Energie einzusparen, werden diese im Wechsel mit entweder dem wenigstens einen zugeordneten Werkzeugkopf 10 und dem wenigstens einen zugeordneten Werkzeugkopf 20 verbunden. Der Wechsel zwischen den Werkzeugköpfen 10 und 20 gestaltet sich so, dass im gerade laufenden Taktzyklus, gegebenenfalls plus einer Pufferzeit, der pro Seite wenigstens eine Werkzeugkopf 20 den zweiten Prozessschritt ausführt, während die Bauteile 1 und 2 einer nachfolgenden Bauteilgruppe in der Geometriestation F1 gespannt werden. Nach Durchführung des zweiten Prozessschritts wird umgeschaltet und der wenigstens eine Werkzeugkopf 10 mit Energie versorgt, um die Bauteile 1 und 2 einer nachfolgenden Bauteilgruppe geometriebildend aneinander zu fixieren.

## Patentansprüche

1. Verfahren zum Löten oder Schweißen von Bauteilen in einer Serienfertigung, vorzugsweise zum Fügen von Fahrzeug-Karosserieteilen, bei dem
längs einer von den Bauteilen (1, 2) gebildeten Fuge durch Schmelzen eines Verbindungsmaterials (3), das als Zusatzwerkstoff zugeführt oder von einem Grundwerkstoff der Bauteile (1, 2) gebildet wird, eine die Bauteile (1, 2) verbindende Fixiernaht (11) erzeugt
und auf die Fixiernaht (11) durch Schmelzen eine volumenbildende Lage (12) Verbindungsmaterial (3) aufgetragen oder die mittels des als Zusatzwerkstoff zugeführten Verbindungsmaterials erzeugte Fixiernaht (11) umgeschmolzen wird,
wobei die die Fixiernaht (11) mit einer ersten Erzeugungsgeschwindigkeit (V1) erzeugt wird und die volumenbildenden Lage (12) oder umgeschmolzenen Fixiernaht (13) mit einer zweiten Erzeugungsgeschwindigkeit (V2) erzeugt wird, wobei die volumenbildende Lage (12) oder umgeschmolzene Fixiernaht (13) je mit einer Erzeugungsgeschwindigkeit (VI, V2) in Längsrichtung der Fuge fortschreitend erzeugt werden. **dadurch gekennzeichnet, dass** die erste Erzeugungsgeschwindigkeit (V1) größer ist als die zweite Erzeugungsgeschwindigkeit (V2), so dass eine Porosität der volumenbildenden Lage (12) oder der umgeschmolzenen Fixiernaht (13) geringer ist als eine Porosität der Fixiernaht (11), und die volumenbildende Lage (12) oder die umgeschmolzene Fixiernaht (13) eine glatte Oberfläche bildet und.

2. Verfahren nach Anspruch 1, wobei die erste Erzeugungsgeschwindigkeit (V1) um wenigstens den Faktor 1.5 größer ist, als die zweite Erzeugungsgeschwindigkeit (V2)

3. Verfahren nach einem der vorhergehenden Ansprüche, bei dem die Fixiernaht (11) längs der Fuge fortschreitend mit einer Geschwindigkeit (V1) von mehr als 3 m/min und die volumenbildende Lage (12) oder umgeschmolzene Fixiernaht (13) längs der Fuge fortschreitend mit einer Geschwindigkeit (V2) von vorzugsweise höchstens 3 m/min erzeugt werden.

4. Verfahren nach einem der vorhergehenden Ansprüche, bei dem bei der Erzeugung der volumenbildenden Lage (12) pro Längeneinheit der Fuge der Masse nach mehr Verbindungsmaterial (3), vorzugsweise wenigstens 1.5 mal so viel Verbindungsmaterial (3) aufgetragen wird als/wie bei der Erzeugung der Fixiernaht (11).

5. Verfahren nach einem der vorhergehenden Ansprüche, bei dem die Bauteile (1, 2) in einer Fertigungslinie mittels einer Spanneinrichtung (15) relativ zueinander in einer Fügeposition gespannt und im gespannten Zustand mittels der Fixiernaht (11) geometriebildend verbunden werden, nach Herstellung der Fixiernaht (11) die Spanneinrichtung (15) gelöst und nach dem Lösen die volumenbildende Lage (12) aufgetragen oder die Fixiernaht (11) umgeschmolzen wird.

6. Verfahren nach einem der vorhergehenden Ansprüche, bei dem drahtförmiges Verbindungsmaterial (3) verwendet und ein freies Ende des Verbindungsmaterials (3) längs der Fuge bewegt und dabei abgeschmolzen wird.

7. Verfahren nach einem der vorhergehenden Ansprüche, bei dem das Verbindungsmaterial (3) mittels eines Energiestrahls (E), vorzugsweise Laserstrahls, geschmolzen, aufgeschmolzen oder umgeschmolzen wird, wobei in bevorzugter Ausführung der Energiestrahl (E) mittels eines Kontaktfühlers (9) längs der Fuge geführt wird und der Kontaktfühler (9) an einander zugewandten Fugenrändern abfährt.

8. Fertigungslinie zum Fügen von Bauteilen umfassend:
eine Förderlinie (14) für die Bauteile (1, 2),
eine in der Förderlinie (14) angeordnete Geometriestation (F1) mit einer Spanneinrichtung (15), mittels der eine Gruppe der Bauteile (1, 2) relativ zueinander in einer Fügeposition spannbar sind und mit einem im Raum beweglichen ersten Aktor (17) mit einem ersten Werkzeugkopf (10), der dazu eingerichtet ist, eine Fixiernaht mit einer ersten Erzeugungsgeschwindigkeit (V1) zu erzeugen,
der für ein Energiestrahl-Löten oder -Schweißen der in Fügeposition befindlichen Bauteile (1, 2) einen ersten Energiestrahler (7), vorzugsweise Laserstrahler, zum Schmelzen eines zuführbaren Löt- oder Schweißmaterials oder nur eines Grundwerkstoffs der miteinander zu verbindenden Bauteile (1, 2) aufweist,
und einen an der Förderlinie (14) in Förderrichtung hinter der Geometriestation (F1) angeordneten, im Raum beweglichen zweiten Aktor (17) mit einem zweiten Werkzeugkopf (20), der zum Energiestrahl-Löten oder -Schweißen einen zweiten Energiestrahler (7), vorzugsweise Laserstrahler, zum Schmelzen des gleichen oder eines weiteren zuführbaren Löt- oder Schweißmaterials aufweist und der dazu eingerichtet ist, eine volumenbildende Lage (12) oder umgeschmolzene Fixiernaht (13) mit einer zweiten Erzeugungsgeschwindigkeit (V2) zu erzeugen,
wobei wenigstens einer der Werkzeugköpfe (10, 20) eine Drahtführung (5, 6) aufweist, über die ein Draht des Löt- oder Schweißmaterials in Längsrichtung des Drahts (3) durch einen Austritt (6) des Werkzeugkopfs (10, 20) förderbar ist, und der Energiestrahler (7) des wenigstens einen der Werkzeugköpfe (10, 20) in Richtung auf eine Spitze des Drahts (3) gerichtet ist **dadurch gekennzeichnet, dass** zum Fügen von Bauteilen mit dem Verfahren nach einem der Ansprüche 1 bis 7, der zweite Aktor (17) dazu eingerichtet ist, den zweiten Werkzeugkopf (20) derart zu bewegen, dass die Erzeugungsgeschwindigkeit (V1) der Fixiernaht (11) größer, vorzugsweise um wenigstens den Faktor 1.5 größer ist als die Erzeugungsgeschwindigkeit (V2) der volumenbildenden Lage (12) oder umgeschmolzenen Fixiernaht (13), so dass die Porosität der volumenbildenden Lage (12) oder der umgeschmolzenen Fixiernaht (13) geringer ist als die Porosität der Fixiernaht (11) und eine glatte Oberfläche gebildet wird.

9. Fertigungslinie nach dem vorhergehenden Anspruch, umfassend eine Steuerung, mittels der die Bewegungen der Aktoren (17) steuerbar und die Werkzeugköpfe (10, 20) im Wechsel aktivierbar sind.

10. Fertigungslinie nach dem vorhergehenden Anspruch, **dadurch gekennzeichnet, dass** die Steuerung den zweiten Werkzeugkopf (20) aktiviert und mittels des zweiten Aktors (17) längs der zuvor erzeugten Fixiernaht (11) bewegt und währenddessen den ersten Werkzeugkopf (10) in einem deaktivierten Zustand hält.

11. Fertigungslinie nach einem der vorhergehenden Ansprüche, **dadurch gekennzeichnet, dass** beide Werkzeugköpfe (10, 20) jeweils eine Drahtführung (5, 6) aufweisen, mittels der jeweils ein Löt- oder Schweißdraht (3) in Längsrichtung des Drahts (3) durch einen Austritt (6) des jeweiligen Werkzeugskopfs (10, 20) förderbar ist, und dass die Energiestrahler (7) in Richtung auf eine Spitze des Drahts (3) des jeweiligen Werkzeugkopfs (10, 20) gerichtet sind.

12. Fertigungslinie nach einem der vorhergehenden Ansprüche, umfassend
- einen Energiestrahlerzeuger (21),
- eine erste Energieübertragungseinrichtung (18), die den Energiestrahlerzeuger (21) mit dem ersten Energiestrahler (7) verbindet,
- und eine zweite Energieübertragungseinrichtung (22), die den Energiestrahlerzeuger (21) mit dem zweiten Energiestrahler (7) verbindet,
- wobei der Energiestrahlerzeuger (21) wahlweise über die jeweilige Energieübertragungseinrichtung (18, 22) mit dem ersten Energiestrahler (7) oder dem zweiten Energiestrahler (7) verbindbar ist.

## Claims

1. A method for soldering or welding components in a series production, preferably for joining vehicle body parts, wherein:
a fixing seam (11) which connects the components (1, 2) is produced by melting a connecting material (3), which is supplied as an additional material or is formed by a base material of the components (1, 2), along a joint formed by the components (1, 2) and a volume-forming layer (12) of connecting material (3) is deposited onto the fixing seam (11) by melting, or the fixing seam (11) produced by means of the connecting material supplied as an additional material is re-melted,
wherein the fixing seam (11) is produced at a first production speed (V1), and the volume-forming layer (12) or re-melted fixing seam (13) is produced at a second production speed (V2),
wherein the volume-forming layer (12) or re-melted fixing seam (13) are each progressively produced in the longitudinal direction of the joint at a production speed (V1, V2),
**characterised in that**
the first production speed (V1) is greater than the second production speed (V2), such that a porosity of the volume-forming layer (12) or re-melted fixing seam (13) is lower than a porosity of the fixing seam (11), and the volume-forming layer (12) or re-melted fixing seam (13) forms a smooth surface.

2. The method according to Claim 1, wherein the first production speed (V1) is greater by a factor of at least 1.5 than the second production speed (V2).

3. The method according to any one of the preceding claims, wherein the fixing seam (11) is progressively produced along the joint at a speed (V1) of more than 3 metres per minute, and the volume-forming layer (12) or re-melted fixing seam (13) is progressively produced along the joint at a speed (V2) of preferably 3 metres per minute at most.

4. The method according to any one of the preceding claims, wherein when the volume-forming layer (12) is being produced, more connecting material (3) - preferably at least 1.5 times as much connecting material (3) - by mass is deposited per unit of length of the joint than when the fixing seam (11) is being produced.

5. The method according to any one of the preceding claims, wherein: the components (1, 2) in a production line are tensed relative to each other in a joining position by means of a tensing means (15) and, while tensed, are connected in a geometry-forming way by means of the fixing seam (11); once the fixing seam (11) has been produced, the tensing means (15) is detached; and once the tensing means (15) has been detached, the volume-forming layer (12) is deposited or the fixing seam (11) is re-melted.

6. The method according to any one of the preceding claims, wherein wire-shaped connecting material (3) is used, and a free end of the connecting material (3) is moved and melted off along the joint.

7. The method according to any one of the preceding claims, wherein the connecting material (3) is melted, melted-on or re-melted by means of an energy beam (E), preferably a laser beam, wherein in a preferred embodiment, the energy beam (E) is guided along the joint by means of a contact sensor (9), and the contact sensor (9) runs off on mutually facing edges of the joint.

8. A production line for joining components, comprising:
a conveying line (14) for the components (1, 2);
a geometry station (F1) which is arranged in the conveying line (14) and comprises a tensing means (15), by means of which a group of the components (1, 2) can be tensed relative to each other in a joining position, and a first actuator (17) which is freely movable spatially and comprises a first tool head (10) which is designed to produce a fixing seam at a first production speed (V1)
and which, for energy-beam soldering or energy-beam welding the components (1, 2) situated in the joining position, comprises a first energy emitter (7), preferably a laser emitter, for melting a soldering or welding material which can be supplied or for melting only a base material of the components (1, 2) to be connected to each other;
and a second actuator (17) which is arranged on the conveying line (14) downstream of the geometry station (F1) in the conveying direction, is freely movable spatially, and comprises a second tool head (20) which, for energy-beam soldering or energy-beam welding, comprises a second energy emitter (7), preferably a laser emitter, for melting the same or another soldering or welding material which can be supplied, and which is designed to produce a volume-forming layer (12) or re-melted fixing seam (13) at a second production speed (V2);
wherein at least one of the tool heads (10, 20) comprises a wire guide (5, 6) via which a wire of the soldering or welding material can be conveyed in the longitudinal direction of the wire (3) through an outlet (6) of the tool head (10, 20), and the energy emitter (7) of the at least one of the tool heads (10, 20) is directed towards a tip of the wire (3),
**characterised in that**
in order to join components using the method according to any one of Claims 1 to 7, the second actuator (17) is designed to move the second tool head (20) such that the production speed (V1) of the fixing seam (11) is greater - preferably by a factor of at least 1.5 - than the production speed (V2) of the volume-forming layer (12) or re-melted fixing seam (13), such that the porosity of the volume-forming layer (12) or re-melted fixing seam (13) is lower than a porosity of the fixing seam (11), and a smooth surface is formed.

9. The production line according to the preceding claim, comprising a controller by means of which the movements of the actuators (17) can be controlled and the tool heads (10, 20) can be alternately activated.

10. The production line according to the preceding claim, **characterised in that** the controller activates the second tool head (20) and moves it along the previously produced fixing seam (11) by means of the second actuator (17) and simultaneously keeps the first tool head (10) deactivated.

11. The production line according to any one of the preceding claims, **characterised in that** each of the two tool heads (10, 20) comprises a wire guide (5, 6), by means of which a soldering or welding wire (3) can respectively be conveyed in the longitudinal direction of the wire (3) through an outlet (6) of the respective tool head (10, 20), and **in that** the energy emitters (7) are directed towards a tip of the wire (3) of the respective tool head (10, 20).

12. The production line according to any one of the preceding claims, comprising:
- an energy-beam producer (21);
- a first energy transmission means (18) which connects the energy-beam producer (21) to the first energy emitter (7);
- and a second energy transmission means (22) which connects the energy-beam producer (21) to the second energy emitter (7);
- wherein the energy-beam producer (21) can be selectively connected to the first energy emitter (7) or the second energy emitter (7) via the respective energy transmission means (18,22).

## Revendications

1. Procédé pour le brasage ou le soudage de composants dans une fabrication en série, de préférence pour l'assemblage de pièces de carrosserie de véhicules, dans lequel
le long d'un joint formé par les composants (1, 2), par fusion d'un matériau de liaison (3), qui est introduit en tant qu'additif ou qui est constitué d'un matériau de base des composants (1, 2), est réalisé un cordon de fixation (11) reliant les composants (1, 2)
et sur le cordon de fixation (11), par fusion, une couche produisant du volume (12) de matériau de liaison (3) est appliquée ou le cordon de fixation (11) réalisé au moyen du matériau de liaison introduit en tant qu'additif est refondu,
le cordon de fixation (11) étant réalisé avec une première vitesse de production (V1) et la couche produisant du volume (12) ou le cordon de fixation refondu (13) est réalisé avec une deuxième vitesse de production (V2),
la couche produisant du volume (12) ou le cordon de fixation refondu (13) étant réalisés chacun en progressant avec une vitesse de production (V1, V2) dans la direction longitudinale du joint,
**caractérisé en ce que**
la première vitesse de production (V1) est supérieure à la deuxième vitesse de production (V2), de façon à ce qu'une porosité de la couche produisant du volume (12) ou le cordon de fixation refondu (13) soit inférieure à une porosité du cordon de fixation (11) et à ce que la couche produisant du volume (12) ou le cordon de fixation refondu (13) présente une surface lisse.

2. Procédé selon la revendication 1, la première vitesse de production (V1) étant supérieure d'au moins un facteur 1,5 à la deuxième vitesse de production (V2).

3. Procédé selon l'une des revendications précédentes, dans lequel le cordon de fixation (11) est réalisé en progressant le long du joint avec une vitesse (V1) supérieure à 3 m/min et la couche produisant du volume (12) ou le cordon de fixation refondu (13) est réalisé en progressant le long du joint avec une vitesse (V2) de préférence de 3 m/min maximum.

4. Procédé selon l'une des revendications précédentes, dans lequel, lors de la réalisation de la couche produisant du volume (12), par unité de longueur du joint, selon la masse, une quantité plus importante de matériau de liaison (3) de préférence au moins 1,5 fois plus de matériau de liaison (3) est appliquée que lors de la réalisation du cordon de fixation (11).

5. Procédé selon l'une des revendications précédentes, dans lequel les composants (1, 2) sont serrés dans une ligne de fabrication au moyen d'un dispositif de serrage (15) l'un par rapport à l'autre dans une position d'assemblage et sont reliés, dans l'état serré, au moyen du cordon de fixation (11) de façon à former une géométrie, après la fabrication du cordon de fixation (11), le dispositif de serrage (15) est desserré et après le desserrage la couche produisant du volume (12) est appliquée ou le cordon de fixation (11) est refondu.

6. Procédé selon l'une des revendications précédentes, dans lequel un matériau de liaison (3) sous la forme d'un fil est utilisé et une extrémité libre du matériau de liaison (3) est déplacée le long du joint et est alors refondue.

7. Procédé selon l'une des revendications précédentes, dans lequel le matériau de liaison (3) est fondu ou refondu au moyen d'un rayon énergétique (E), de préférence un rayon laser, moyennant quoi, dans une réalisation préférée, le rayon énergétique (E) est guidé au moyen d'un détecteur de contact (9) le long du joint et le détecteur de contact (9) parcourt des bords de joints orientés les uns vers les autres.

8. Ligne de fabrication pour l'assemblage de composants, comprenant :
une ligne de convoyage (14) pour les composants (1, 2),
une station de géométrie (F1) disposée dans la ligne de convoyage (14), avec un dispositif de serrage (15), au moyen duquel un groupe de composants (1, 2) peuvent être serrés entre eux dans une position d'assemblage et avec un premier actionneur (17), mobile dans l'espace, avec une première tête d'outil (10), qui est conçue pour réaliser un cordon de fixation avec une première vitesse de production (V1),
qui, pour un brasage ou un soudage à rayon énergétique des composants (1, 2) se trouvant dans une position d'assemblage, comprend un premier émetteur de rayonnement énergétique (7), de préférence un émetteur de rayon laser, pour la fusion d'un matériau de brasage ou de soudage pouvant être introduit ou seulement d'un matériau de base des composants (1, 2) à relier entre eux,
et un deuxième actionneur (17), disposé sur la ligne de convoyage (14), derrière la station de géométrie (F1) dans le sens de convoyage, mobile dans l'espace, avec une deuxième tête d'outil (20), qui comprend, pour le brasage ou le soudage à rayon énergétique, un deuxième émetteur de rayonnement énergétique (7), de préférence un émetteur de rayon laser, pour la fusion du même matériau de brasage ou de soudage pouvant être introduit, ou d'un autre, et qui est conçu pour réaliser une couche produisant du volume (12) ou un cordon de fixation refondu (13) avec une deuxième vitesse de production (V2),
au moins une des têtes d'outil (10, 20) comprenant un guidage de fil (5, 6) par l'intermédiaire duquel un fil du matériau de brasage ou de soudage peut être convoyé dans la direction longitudinale du fil (3) à travers une sortie (6) de la tête d'outil (10, 20) et l'émetteur de rayonnement énergétique (7) de l'au moins une des têtes d'outil (10, 20) est orienté en direction d'une pointe du fil (3),
**caractérisé en ce que**
pour l'assemblage de composants avec le procédé selon l'une des revendications 1 à 7, le deuxième actionneur (17) est conçu pour déplacer la deuxième tête d'outil (20) de façon à ce que la vitesse de production (V1) du cordon de fixation (11) soit supérieure, de préférence d'au moins le facteur 1,5, à la vitesse de production (V2) de la couche produisant du volume (12) ou du cordon de fixation refondu (13), de façon à ce que la porosité de la couche produisant du volume (12) ou du cordon de fixation refondu (13) soit inférieure à la porosité du cordon de fixation (11) et de façon à ce qu'une surface lisse soit formée.

9. Ligne de fabrication selon la revendication précédente, comprenant un dispositif de commande, au moyen duquel les déplacements des actionneurs (17) peuvent être contrôlés et les têtes d'outils (10, 20) peuvent être activées en alternance.

10. Ligne de fabrication selon la revendication précédente, **caractérisée en ce que** le dispositif de commande active la deuxième tête d'outil (20) et la déplace, au moyen du deuxième actionneur (17), le long du cordon de fixation (11) préalablement réalisé et maintient pendant ce temps la première tête d'outil (10) dans l'état désactivé.

11. Ligne de fabrication selon l'une des revendications précédentes, **caractérisée en ce que** les deux têtes d'outils (10, 20) comprennent chacune un guidage de fil (5, 6), au moyen duquel un fil de brasage ou de soudage (3) peut être convoyé dans la direction longitudinale du fil (3) à travers une sortie (6) de la tête d'outil (10, 20) correspondante, et **en ce que** les émetteurs de rayons énergétiques (7) sont orientés en direction d'une pointe du fil (3) de la tête d'outil (10, 20) correspondante.

12. Ligne de fabrication selon l'une des revendications précédentes, comprenant
- un générateur de rayon énergétique (21),
- un premier dispositif de transmission énergétique (18), qui relie le générateur de rayon énergétique
- (21) avec le premier émetteur de rayon énergétique - (7),
- et un deuxième dispositif de transmission énergétique (22), qui relie le générateur de rayon énergétique (21) avec le deuxième émetteur de rayon énergétique (7),
- le générateur de rayon énergétique (21) pouvant être au choix relié, par l'intermédiaire du dispositif de transmission énergétique (18, 22) correspondant, avec le premier émetteur de rayon énergétique (7) ou le deuxième émetteur de rayon énergétique (7).
